# EUROPÄISCHE PATENTANMELDUNG

(11) **EP 1 350 452 A1**
(43) Veröffentlichungstag der Anmeldung: **08.10.2003**
(21) Anmeldenummer: 03405221.7
(22) Anmeldetag: 02.04.2003
(51) Int. Cl.: A47G 9/02

(54) **Wärme und Feuchte regulierende Bettware**

(30) Priorität: 02.04.2002 CH 5422002
(71) Anmelder: Thermobalance AG, 8260 Stein am Rhein (CH); Schoeller Textil AG, 9475 Sevelen (CH)
(72) Erfinder: Wehrli, Ueli, 8260 Stein am Rhein (CH); Stüssi, Roland, 8260 Wagenhausen (CH)
(74) Vertreter: Frei, Alexandra Sarah

(57) **Zusammenfassung**

Die Erfindung betrifft Wärme und Feuchte regulierende Bettwaren. Diese beinhalten eine Kombination von Wärme regulierenden Mitteln in Form von 'phase change materials', Feuchte regulierenden Mitteln in Form von Füllmaterial und herkömmlichen, auch in der Bettwarenherstellung bekannten Textilien. Das erfindungsgemässe Zusammenspiel unterschiedlicher Materialien, sowie die Verarbeitung und Gestaltung derselben, bilden ein Komposit (10), welches eine ausgleichende Wirkung bezüglich Wärme und Feuchtigkeit in seiner nahen Umgebung ermöglicht. Im Speziellen reagiert die erfindungsgemässe Bettware auf sich ändernde Umgebungstemperaturen, sowie Feuchtigkeit und Nässe.

## Beschreibung

Die Erfindung betrifft eine Wärme und Feuchte regulierende Bettware gemäss dem Oberbegriff der unabhängigen Patentansprüche.

Handelsübliche Bettwaren sind weich und angenehm auf der Haut, wobei eine Anpassung an kalte oder warme Jahreszeiten vorwiegend durch die Dicke einer Decke oder die Anzahl Decken geschieht. Eigenschaften herkömmlicher Bettwaren beschränken sich vorwiegend auf das Isolationsvermögen und auf ein weiches oder flauschiges Gefühl beim Berühren der frischen Ware. Keinen wesentlichen Einfluss haben die Bettwaren beispielsweise auf die sich ändernde Körpertemperatur im Verlaufe einer Nacht, oder auf schwankende Aussentemperaturen während Übergangzeiten zwischen kalter und warmer Jahreszeit. Ein Temperaturausgleich kann nur durch Entfernen der Decke und erneutes Zudecken erreicht werden. Dies bedingt häufige - bewusste oder unbewusste - Bewegungen und entsprechend unruhigen und schlechten Schlaf. Neigt der Benutzer der Bettwaren zudem zu starkem Schwitzen, wird die Bettwäsche durchnässt und die Feuchtigkeit nicht oder nur mangelhaft abtransportiert. Dies äussert sich in der Folge in einem unangenehmen Feuchte- bzw. Nässegefühl oder sogar dadurch, dass der Benutzer aufgrund von Verdunstungskühle anfängt zu frieren oder sich verkühlt. Herkömmliche Bettwaren sind nicht darauf ausgerichtet, auf sich ändernde Umgebungsbedingungen zu reagieren.

In der Herstellung von Bekleidungen sind Materialien bekannt, die sich in gewissem Masse an Umgebungsänderungen anpassen können. Je nach Verwendungszweck der Bekleidungsstücken, wie Jacken, Schuhe usw., werden spezielle Materialien verarbeitet. So werden bestimmte Kunststoffe, beispielsweise Polyester, zu Sportkleidung verarbeitet, die Feuchtigkeit vom Körper wegleiten. Diese Kleidungsstücke besitzen aber keine oder nur wenig wärmende oder isolierende Eigenschaften, so dass sich diese Materialien in der Form nicht für die Verwendung für Bettwaren eignen.

Eine vielversprechende Entwicklung führt in die Richtung von sogenannten 'intelligenten Textilien' auf der Basis von ,Phase Change Materials' (PCMs). Diese Textilien werden als 'intelligent' bezeichnet, da sie in der Lage sind in gewissem Masse auf eine sich ändernde Wärmeumgebung zu reagieren. Der Effekt beruht auf einer Wärmeregulierung, die durch das Einbringen der PCM in die Textilien hervorgerufen wird. Die PCM, beispielsweise winzige Wachskügelchen, wechseln in einem definierten Temperaturbereich ihren Aggregatzustand. Der Phasenübergang fest-flüssig bewirkt eine gewisse Energiespeicherung, wobei die Energie beim Übergang flüssig-fest als Wärme wieder abgeben wird. Um optimale Wirkung der PCM zu erreichen, ist es jedoch entscheidend, dass Parameter wie beispielsweise Menge, Verteilung und Schmelzübergang des PCM richtig gewählt werden. Bei falscher Verwendung kann ein Effekt verhindert oder sogar eine gegenteilige Wirkung gegenüber herkömmlichen Materialien eintreten. Ein zu hoher Schmelzübergang des gewählten Materials kann beispielsweise zuviel Wärme speichern ohne sie wieder abzugeben und so für einen unerwünschten Wärmeentzug sorgen.

Bettwaren stellen sehr spezielle Anforderungen an die Qualität, den Komfort und diesbezüglich an die Wärme- und Feuchteeigenschaften der verwendeten Materialien. Bezüglich Wärmeregulation sind ausgleichende Effekte von Vorteil.

Zudem sollte ein Textil übermässige Feuchtigkeit abführen können und angenehm bei Berührung sein, sich also beispielsweise auch bei Schwitzen des Benutzers weich und flauschig anfühlen.

Es ist deshalb Aufgabe der Erfindung Bettwaren zu schaffen, die ein höheres Komfortempfinden bieten als herkömmliche Bettwaren. Im Speziellen ist es Aufgabe der Erfindung Bettwaren zu schaffen, die ein ausgleichendes und im wesentlichen konstantes Wärme- und Feuchteklima beim Schlafen schaffen.

Die Aufgabe wird durch die Erfindung gelöst wie sie in den Patentansprüchen definiert ist.

Die erfindungsgemässen Bettwaren sind aus einem Materialverbund, einem sogenannten Komposit hergestellt. Dieses beruht auf der Kombination von Wärme regulierenden Mitteln, Feuchte regulierenden Mitteln und herkömmlichen, auch in der Bettwarenherstellung bekannten Textilien. Das erfindungsgemässe Zusammenspiel unterschiedlicher Materialien im Komposit, sowie die Verarbeitung und Gestaltung derselben, ermöglichen eine ausgleichende Wirkung der Bettwaren bezüglich Wärme und Feuchtigkeit in ihrer nahen Umgebung. Im Speziellen reagieren sie auf sich ändernde Umgebungstemperaturen, sowie Feuchtigkeit und Nässe.

Die physikalischen Eigenschaften der Materialien im Komposit, insbesondere welche Wärme und Feuchtigkeit betreffen, stehen in gegenseitiger Wechselwirkung. Sie können sich gegenseitig beeinflussen und ergänzen. Eine erfindungsgemässe Bettware bildet somit ein Wärme- und Feuchte regulierendes System, bei welchem sich die Lösung der Aufgabe aus der Gesamtheit des Komposits ergibt.

Das Zusammenwirken von Wärme und Feuchte regulierenden Mitteln bewirkt, dass der engen Verknüpfung von Wärme und Feuchtigkeit Rechnung getragen wird. Im Speziellen wird ab einem gewissen erhöhten Temperaturbereich Wärme von den Wärme regulierenden Mitteln absorbiert. Feuchtigkeit und Nässe wird mittels Feuchte regulierende Mittel absorbiert und vorzugsweise weiter- bzw. abgeleitet. Das Komposit ist zudem so aufgebaut, dass Feuchtigkeit möglichst gut verdunsten kann. Die Verdunstung von Feuchtigkeit verbraucht Energie, was es ermöglicht, überschüssige Wärme auch über die Verdunstung von Feuchtigkeit abzuführen. Das Abführen von Energie macht sich typischerweise in sinkenden Temperaturen bemerkbar. Vorhandene Wärme regulierende Mittel können jedoch auf eine solche Temperaturerniedrigung reagieren und diese verhindern oder abschwächen. Das erfindungsgemässe Komposit reagiert also nicht nur auf erhöhte Temperaturen, Feuchtigkeit und Nässe, sondern auch auf sinkende Temperaturen. Der Temperaturbereich in dem die Wärme regulierenden Mittel aktiv sind bzw. regeln können, wird von den Feuchte regulierenden Mitteln noch ergänzt bzw. erweitert.

Eine erfindungsgemässe Bettware ist zudem weich und angenehm anzufühlen und weist Flexibilität und eine gewisse Dehnbarkeit auf.

Wärme regulierende Mittel sind beispielsweise sogenannte ,Phase Change Materials' (PCMs), die in unterschiedlichen Formen in ein Material oder ein Textil eingebracht werden können. Vorzugsweise werden dazu kleine Kügelchen von einigen zehn Mikrometern des PCMs in Textilfasern eingesponnen, in eine Beschichtung eingesetzt, ein- oder aufgepresst oder in Schäume bzw. Flüssigkeiten eingebracht. Die Wirkung der PCM entsteht dadurch, dass sie in einem definierten Temperaturbereich ihren Aggregatzustand ändern. Beim Aufwärmen des festen Zustands wird das PC-Material verflüssigt und nimmt dabei eine bestimmt Wärmemenge auf. Beim Abkühlen wird das PC-Material wieder verfestigt und eine definierte Wärmemenge wird abgegeben. Je nach Verteilung, Menge und Wahl des PCMs kann die Wärmeregulierung abgeschwächt, verstärkt oder die Dauer der Wärmeabgabe und -aufnahme verlängert oder verkürzt werden.

Typische PCMs sind Paraffin oder wachsartige Stoffe, z. B. Wachs, die beispielsweise mit einer Kunststoffhülle umgeben sind, so dass das Wachs im flüssigen Zustand nicht auslaufen kann. Die Wahl der Schmelztemperatur und des Schmelzverhaltens der PCMs ist mitentscheidend für ihre Wirksamkeit. Für den Einsatz beim Menschen, speziell in Textilien, werden PCMs mit einer Phasenänderung in einem vorzugsweisen Temperaturbereich von ca. 10 °C -40 °C verwendet. Kommerziell erhältliche PCMs sind ca. 10 - 20 µm grosse Kügelchen, die als Mischungen von Materialien mit Phasenzustandsänderungstemperaturen von beispielsweise 18 °C, 28 °C und 35 °C erhältlich sind.

Das Wärmeaufnahmevermögen eines PCM-haltigen Materials ist mehrheitlich durch den Anteil des PCMs darin bestimmt. Der gewichtsmässige Anteil des in Fasern eingebrachtes PCM liegt beim heutigen Stand der Technik bei einem Maximalwert von ca. 8 %. Der gewichtsmässige Anteil von PCMs in Schäumen oder in einer Flüssigkeit liegt in etwa bei bis zu 50 %. Typische Schaumschichtdicken liegen in einem Bereich von ca. 1-6 mm, vorzugsweise zwischen 2 und 5 mm, z. B. 2 mm. PCM Schäume bieten den zusätzlichen Vorteil, dass sie Wasser sehr gut absorbieren und eine beachtliche Wasseraufnahmefähigkeit aufweisen.

In der erfindungsgemässen Bettware verwendete PCM-Schäume sind vorzugsweise als im wesentlichen gleichmässige Schichten mit unterschiedlicher Dicke gestaltet. Die Schäume können aber auch Strukturen und Aussparungen aufweisen. Die Strukturen dienen unter anderem dazu, die Flexibilität eines Schaumes zu erhöhen. Gewisse Strukturen erhöhen nicht nur die Biegsamkeit einer Schicht, sondern verkleinern gleichzeitig ihre effektive Auflagefläche. Ein Schaum kann dazu auch als gitterartige Fläche ausgebildet sein oder zu einer solchen verarbeitete Einzelstränge aufweisen. Der PCM haltige Schaum kann zur besseren Luftzirkulation mit Öffnungen, beispielsweise Schlitzen, versehen sein. Wird das PCM Material in eine Flüssigkeit eingebracht, so kann diese in im wesentlichen ohne Einschränkungen in der Verteilung oder Anordnung auf eine beliebige Unterlage aufgebracht werden. Die PCM haltige Flüssigkeit härtet nach dem Aufbringen auf eine Unterlage vorzugsweise zu einer weichelastischen Masse aus. Wird die Unterlage sehr dünn gewählt, beispielsweise als Spinnvlies, eignet sie sich besonders für die Verwendung in dünnen Bettwaren, sowie in solchen, die eine erhöhte Biegsamkeit verlangen, wie dies beispielsweise bei Duvets und Leintücher der Fall ist. Bei den gewählten Materialien bzw. deren Verarbeitung ist darauf zu achten, dass sich der gesamte Aufbau angenehm anfühlt und nicht zuviele und/oder unangenehm anzufühlende Strukturen aufweist.

Einige Eigenschaften und beispielhafte Werte für PCM enthaltende Schäume (>2 mm Dicke) sind:
- Wärmeaufnahmefähigkeit: 40 kJ/m² oder 170 J/g PCM
- Wärmeisolation: 12.5 m² K/W bei 7 °C; 10.5 m²K/W bei 35 °C. D.h. PCM-Schäume isolieren in kälterem Zustand besser, vermutlich aufgrund verminderter Wärmeleitfähigkeit der PCM in festem Zustand gegenüber dem flüssigem Zustand.
- Waschbar
- Nur geringfügige Volumenverkleinerung bei längerem Gebrauch
- Wasseraufnahmefähigkeit: 100-300 g/m²

Der letzte Punkt der Liste zeigt deutlich, dass in Schäume eingearbeitetes PCM einen nicht zu vernachlässigenden Einfluss auf das Feuchteklima hat. Die Schäume besitzen die Eigenschaft, eine gewisse Menge an Wasser wie ein Schwamm in sich aufzusaugen.

Als Feuchte regulierende Mittel werden in Schäume oder Flüssigkeiten eingebrachtes PCM verwendet. Des Weiteren werden auch Materialien verwendet, die die Fähigkeit aufweisen, Feuchtigkeit zu absorbieren oder zu transportieren. Dies geschieht vorzugsweise aufgrund der Zusammensetzung oder Struktur des Materials, in dem Feuchtigkeit gebunden und/oder abgeleitet wird. Als Feuchte regulierende Mittel eignen sich besonders längliche Fasern, die zu einem Vlies verarbeitet oder zu einem Gewebe gewoben bzw. gesponnen werden. Entlang den Fasern, die beispielsweise aus Polyester oder Seide bestehen, kann Wasser und Feuchtigkeit aufgrund der vorhandenen Kapillarkraft ab- bzw. weitergeleitet werden. Auch Daunen und Federn oder synthetisches Füllmaterial aus den entsprechenden Materialien besitzen neben ihrer Volumen gebenden, isolierenden Eigenschaft, auch eine intrinsische Feuchteaufnahmefähigkeit und Leitfähigkeit für Wasser.

In der erfindungsgemässen Bettware können bekannte Bettwaren-Füllmaterialien verwendet werden. Dies sind allgemein tierische, pflanzliche oder synthetische Füllmaterialien, wie beispielsweise Daunen, Federn, Vliesse, beispielsweise Seidenvliesse, Wolle, zu Füllmaterialien verarbeitete synthetische Fasern, aber auch aus diesen unterschiedlichen Rohstoffen zu Füllmaterialien verarbeitete Mischgewebe.

Ein erfindungsgemässes Komposit enthält auf die Verwendung, z. B. als Duvet oder Matratzenauflage, optimierte Wärme und Feuchte regulierende Mittel. In einer bevorzugten Ausführungsform ist dies ein PCM Schaum oder ein mit PCM haltigem Material versehene Unterlage, welche mit Polyester- oder Seide und/oder mit isolierenden, weichen Materialien, wie Baumwolle oder Daunen oder anderen Füllmaterialien ergänzt sind. Die Wärme und Feuchte regulierenden Mittel sind dabei zu Schichten verarbeitet oder schichtförmig im Komposit angeordnet. Die Feuchte regulierenden Mittel leiten aufgenommene Feuchtigkeit bevorzugt von einem Aufnahmebereich, der beispielsweise ein Körper- oder Liegebereich ist, weg. Das Ableiten geschieht bevorzugt seitlich nach aussen zu Randbereichen, aber auch radial, durch die Dicke einer Bettware hindurch. Randbereiche können zusätzlich atmungsaktiv, z. B. offenporig, gestaltet sein, so dass Feuchtigkeit in diesen Bereichen leichter verdunstet. Die Wärme regulierenden Mittel nehmen überschüssige Wärme auf und geben diese bei Bedarf wieder ab. Im Speziellen reagieren sie auch auf Wärmeunterschiede, die durch die Verdunstung von Feuchtigkeit entsteht. Je näher Feuchte und Wärme regulierende Mittel beieinander liegen bzw. je optimaler sie kombiniert und auf die Verwendung zugeschnitten sind, desto schneller und effizienter kann eine Wärme- und Feuchte Regulierung mittels eines erfindungsgemässen Komposits stattfinden.

Verteilung und Menge der Wärme und Feuchte regulierenden Mittel, einzeln oder kombiniert mit Isolationsmaterialien, Aussenschichten, usw. können einheitlich im gesamten Bereich einer Bettware vorgesehen sein oder auch lokal variieren. Beispielsweise kann ein, vorzugsweise der Körperform angepasster Bereich aus unterschiedlichen oder in unterschiedlicher Menge vorhandenen Materialien bestehen. Dazu ist der Körperbereich einer Bettware, beispielsweise ein mittlerer Längsbereich eines Matratzenüberzugs, einer Matratzenauflage oder eines Duvet PCM haltig. Ein Aussenbereich, z. B. die Randbereiche einer Auflage oder eines Duvet, weist dann kein oder nur in beschränktem Masse PCM auf. Auch andere Materialien beispielsweise Isolations- und Füllmaterialien wie Baumwolle, Daunen oder Federn, können in unterschiedlichen Mengen über ein Duvet oder Kissen verteilt sein. Des Weiteren können auch verschiedene Regionen im Körperbereich unterschiedlich gestaltet sein. Es ist wissenschaftlich erwiesen, dass das Einschlafen erleichtert wird, wenn alle Körperteile im wesentlichen dieselbe Temperatur aufweisen. Hat beispielsweise eine Person vermehrt kalte Füsse, kann der Fussbereich einer Auflage oder einer Decke, besonders isolierend oder wärmerückhaltend gestaltet werden. Auch die Anzahl und Anordnung der Schichten kann im wesentlichen beliebig gewählt werden. Insbesondere können einzelne Schichten mehrere Funktionen in sich kombiniert aufweisen.

Ein erfindungsgemässes Komposit ist symmetrisch oder asymmetrisch aufgebaut. Ist ein Komposit schichtweise aufgebaut, kann sich diese Symmetrie oder Asymmetrie auf eine Mittelschicht beziehen. Ein symmetrisch aufgebautes Komposit weist von einer Mittelschicht aus im wesentlichen beidseitig dieselbe Schichtabfolge auf und hat entsprechend beidseitig die gleiche Wirkung und Funktion. Ein asymmetrisches Komposit ist beispielsweise so gestaltet, dass die eine Seite einen kühlenden Effekt und die zweite Seite einen neutralen oder wärmenden Effekt aufweist. Eine mit einem solchen Komposit gestaltete Bettware ist beispielsweise Jahreszeiten und Personen abhängig verwendbar. Die einzelnen Materialien in den Schichten sind dergestalt gewählt, so dass sie in enger Wirkverbindung mit den Materialien benachbarter Schichten stehen. Die physikalischen Eigenschaften der Materialien bzw. Schichten stehen mit der Umgebung und gegenseitig in Wechselwirkung.

Ein unterschiedlicher Effekt zweier Seiten eines Komposits wird bevorzugt dadurch erreicht, indem die Menge und/oder Art des PCMs im Komposit örtlich variiert. Ein kühlender Effekt entsteht vorzugsweise dadurch, dass sich das PCMs möglichst aussen an einem Komposit befindet. D. h. höchstens wenige, nicht PCM haltige Materialien oder isolierende dünne Schichten sind zwischen dem PCT bzw. dem PCM haltigen Material und der Umgebung, beispielsweise einem Körper, angeordnet. PCM haltigen Materialien ist das Merkmal eigen, bei anfänglicher Berührung einen kühlenden Effekt aufzuweisen. Experimente an PCM Schäumen zeigen, dass dieser Effekt in den ersten paar Minuten deutlich spürbar ist und in ca. der ersten Stunde kontinuierlich noch vorhanden, aber kleiner ist. Ein Kühleffekt einer Bettware ist vor allem im Sommer und bei Personen vorteilhaft, die kühlere Umgebung beim Liegen und Schlafen oder Einschlafen bevorzugen. Wird die Liegeposition verändert, tritt der Kühleffekt erneut auf. Dieser Effekt kann dadurch vermindert oder überdeckt werden, indem sich zwischen der Umgebung und dem PCM haltigen Material eine (zusätzliche) isolierende Schicht, beispielsweise eine Baumwoll- oder Daunenschicht oder ein Seidenvlies, befindet. Vor allem im Winter und für Personen, die leicht frieren, ist ein Kältegefühl beim Einschlafen eher unerwünscht.

Des Weiteren kann ein unterschiedlicher Effekt zweier Seiten eines erfindungsgemässen Komposits durch einen speziell gestalteten PCM Schaum bzw. das Einbringen unterschiedlicher PCM Schäume erreicht werden. Beispielsweise kann ein Schaum auf der einen Seite als im wesentlichen ebene Schicht gestaltet sein, während die gegenüberliegende Seite des Schaums mit Strukturen versehen ist. Je nach Struktur wird die effektive Auflagefläche verkleinert. Mit einer geringeren Auflagefläche ist auch weniger PCM in im wesentlichen direktem Kontakt mit der Umgebung. Dies ist auch der Fall, wenn beispielsweise nahe der Oberseite eines Komposits eine im wesentlichen ebene Schicht eines PCM Schaumes angebracht ist, während nahe der Unterseite des Komposits beispielsweise ein lockeres Geflecht eines PCM Schaumes eingebracht ist.

In der erfindungsgemässen Bettware wird durch die Verwendung von Wärme und Feuchte regulierenden Mitteln der engen Verknüpfung von Wärme und Feuchtigkeit Rechnung getragen. Ab einem gewissen erhöhten Temperaturbereich wird Wärme absorbiert. Dies führt dazu, dass eine Person ihre Umgebung als weniger warm empfindet und demzufolge weniger schwitzt. Es wird absolut gesehen weniger Feuchtigkeit und Nässe produziert, die abgeleitet werden muss. Bereits vorhandene oder überschüssige Feuchtigkeit und Nässe wird rasch vom Körper weggeführt und es entsteht kein Nässestau. Das mit einem Nässestau verbundene Feuchte- bzw. Nässegefühl vermindert den Schlafkomfort erheblich. Die erfindungsgemässe Bettware eignet sich somit um Temperaturen zu regulieren, ein Feuchte- oder Nässegefühl, sowie ein Kältegefühl, falls unerwünscht, zu verhindern. Dies wiederum führt zu angenehmen Schlafbedingungen, weniger Bewegungen vor oder während des Schlafs und somit zu erleichtertem Einschlafen und tieferem Schlaf. Eine Person fühlt sich nach dem Schlafen entsprechend erholt und frisch. Die Bettware bietet somit einen sehr hohen Schlafkomfort, wobei die Schlafqualität erhöht werden kann. Dadurch, dass permanente Staunässe verhindert wird, entsteht keine Schimmelbildung, die zu gesundheitlichen Problemen führen kann. Somit sorgt die erfindungsgemässe Bettware auch für hygienischere Bedingungen im Schlafbereich.

Im Folgenden soll anhand einiger Beispiele auf bevorzugte Anwendungsformen der erfindungsgemässen Bettware näher eingegangen werden.

### Auflagen bzw. Umhüllungen für Matratzen, Wasser- und Luftbetten:

Auflagen und Umhüllungen für Matratzen weisen bevorzugt Feuchte regulierende Mittel auf, die Feuchtigkeit und Nässe effizient aufnehmen und bevorzugt seitlich ableiten. Speziell in Wasser- oder auch Luftbetten ist Ansammlung von Feuchtigkeit ein bisher ungelöstes Problem. Die Umhüllung eines solchen Bettes besteht meist aus einer ein paar Millimeter dicken Folie, die u. U. aussen mit einem Baumwollgestrick umgeben ist. Der Folie kommt die Aufgabe zu, den Inhalt eines Betts, also Wasser oder Luft, absolut dicht gegen aussen zu verschliessen. Entsprechend erlauben diese Folien keinerlei Luft oder Feuchtigkeitszirkulation, so dass permanenter Nässestau und Schimmelbildung die Folge sind. Im Rahmen der Erfindung kann nun eine Bettware hergestellt werden, die sich speziell als Auflage für Wasser- bzw.

Luftbetten, direkt als Umhüllung für solche Betten bzw. als Bestandteil einer konventionellen Matratze eignet.

Die Wärme- und Feuchte regulierenden Mittel einer Auflage sind bevorzugt auch in Form einer PCM haltigen Schaumschicht gestaltet. Diese besitzen bereits eine sehr hohe Wasseraufnahmefähigkeit. Zudem ist diese Schaumschicht so gewählt, dass eine Schichtenkombination mit zusätzlichen Aussen- und Zwischenschichten, z. B. Baumwollgestricken, Satin, Velour, Spinnvliese oder Seidenvliese, bequem handhabbar ist und mit Einfassungen und allfälligen Absteppungen versehen werden kann. Zusätzliche Feuchte regulierende Mittel können Leitschichten, d.h. in oder zu richtungsgebenden Gestricken und Geweben verarbeitete Fasern, z. B. Polyester oder Seide, sein. Diese leiten Feuchtigkeit entlang den Fasern vorzugsweise in Randbereiche einer Auflage oder einer Matratzenumhüllung. Als Feuchte regulierende Mittel dienen auch sogenannte Seidenvliese. Dies sind kurze Seidenfasern, die zu einem meist luftigen Vlies verarbeitet werden und als Füllmaterial dienen. Aufgrund der hygroskopischen Natur der Seidefasern wird Feuchtigkeit vom Seidenvlies aufgenommen und entlang den Seidefasern verteilt. Die grosse Oberfläche, die durch die Seidefasern im Seidenvlies geschaffen wird, erleichtert zudem die Verdunstung von Feuchtigkeit. Eine Leitschicht oder ein Seidenvlies kann mit zusätzlichen Schichten ergänzt werden. Diesen kommt beispielsweise die Aufgabe zu, Feuchtigkeit aus der Umgebung ins Innere, z. B. in die Leitschicht, zu leiten und gegebenenfalls ein Wiederaustreten von Feuchtigkeit an die Umgebung zu verhindern. Sämtliche Aufgaben können auch durch die Leitschicht selber übernommen werden.

Ist ein Wasserbett mit einer Heizung versehen, so kann beispielweise das in eine Auflage oder Umhüllung eingebrachte PCM, ein leicht überhitztes oder ein leicht zu kühles Wasserreservoir puffern und als optimale Ergänzung zur bestehenden Wärmeregulation des Wassers dienen.

Wird ein erfindungsgemässes Komposit für eine Wasser- oder Luftbettumhüllung gestaltet, so ist eine innerste Schicht des Komposits eine Wasser bzw. Luft undurchlässige Folie.

Für Leintücher bzw. allgemein eher schlanke Bettwaren, werden auch Materialien verwendet, die zu möglichst dünnen Geweben, vorzugsweise von einer Dicke in einem Bereich von unter 2 mm, verarbeitet werden können. Diese Gewebe weisen falls gewünscht eine erhöhte Dehnbarkeit auf. Für Leintücher, aber auch Aussenschichten, geeignete Materialien sind typischerweise Maschengewebe, wie Jersey und andere herkömmliche, für die Herstellung von Fixleintüchern bekannte Materialien. In einem Leintuch können Wärme- und Feuchte regulierende Mittel direkt als PCM in Fasern eingearbeitet werden, wobei diese alleine oder zusammen mit beispielsweise Baumwollfasern zu Maschengewebe verarbeitet werden. Es ist aber auch möglich das Maschengewebe, vorzugsweise die Unterseite, mit PCM haltigem Material zu versehen bzw. zu beschichten und diese mit einem allfälligen zweiten Maschengewebe abzudecken. Ein Maschengewebe beinhaltet bereits aufgrund seiner Struktur eine bevorzugte Richtung. Feuchtigkeit kann somit bei entsprechender Materialwahl beispielsweise in Randbereiche des Leintuchs, abgeführt werden.

### Decken oder Duvets, Kissen:

Für Decken, Duvets und Kissen werden vorzugsweise PCM haltige oder PCM aufweisende Materialien verwendet, die sehr flexibel gestaltet sind. Äussere Schichten eines Duvets, beispielsweise Mischgewebe mit Baumwolle und Seide oder Polyester, sind angenehm weich und nehmen Feuchtigkeit gut auf bzw. leiten Feuchtigkeit möglichst rasch ins Innere der Bettware ab. Die Feuchtigkeit wird bei Duvets und Decken vermehrt nicht nur seitlich sondern auch durch die Decke bzw. das Duvet hindurch, weggeführt. Decken, Duvets und Kissen weisen ein gewisses Volumen auf, das im wesentlichen aus einem weichen Füllmaterial, beispielsweise Daunen, Federn, Vliesse oder synthetischen Füllmaterialien besteht. Daunen und Federn besitzen neben ihren isolierenden und polsternden Eigenschaften ebenfalls die Fähigkeit Feuchtigkeit aufzunehmen. Zudem bieten sie eine sehr grosse Oberfläche, an denen Feuchtigkeit verdunsten kann. Das lockere Material erlaubt zudem eine erhöhte Luftzirkulation.

Nachfolgend wird die erfindungsgemässe Bettware und sein Wirkungsprinzip anhand beispielhafter Ausführungsformen und mittels schematisch gezeichneter Figuren beschrieben. Es zeigen
Fig. 1a und 1b das Wirkungsprinzip eines erfindungsgemässen Komposits,
Fig. 2 den Aufbau eines erfindungsgemässen Komposits für die Herstellung eines Duvets ausgerichtet,
Fig. 2b eine Aufsicht auf ein erfindungsgemässes Duvet,
Fig. 3 den Aufbau einer erfindungsgemässen Matratzenauflage,
Fig. 4 eine als Leintuch gestaltete Matratzenauflage,
Fig. 5 ein symmetrisch aufgebautes Duvet,
Fig. 6 eine Matratze mit eingearbeitetem bzw. integriertem Komposit.

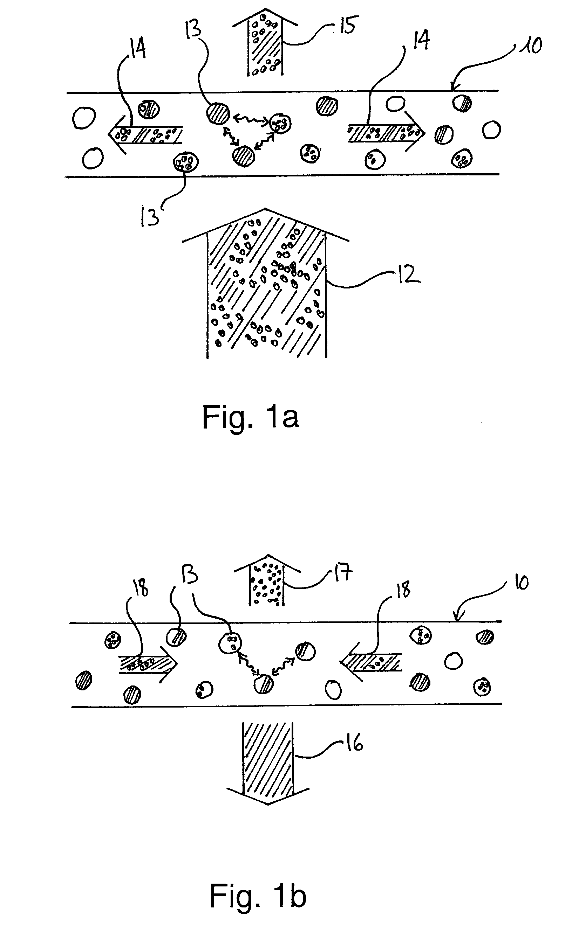

Die **Figuren 1a und 1b** zeigen das Wirkungsprinzip eines erfindungsgemässen Komposits 10. Die Hauptströmrichtungen und Mengen von Wärme und Feuchtigkeit 12, 14-18 sind mit Pfeilen variabler Grösse schematisch dargestellt.

In Figur 1a ist die Situation einer Wärme- und Feuchtigkeitszufuhr aus der Umgebung ins Komposit 10 zu sehen. Wärme und Feuchte regulierende Mittel 13 im Komposit 10 nehmen eine bestimmte Wärme- und Feuchtigkeitsmenge auf, was anhand gefüllter und leerer Kreise dargestellt ist. Die Wärme und Feuchte regulierenden Mittel 13 stehen auch untereinander in Wirkverbindung, was mit gewellten Pfeilen angedeutet ist. Diese Wirkverbindung besteht im wesentlichen darin, dass durch Verdunstung entzogene Wärmeenergie zur Abkühlung der Feuchte und Wärme regulierenden Mittel 13 führt. Die Wärme regulierenden Mittel geben dabei ihrerseits gespeicherte Wärmeenergie ab, welche beispielsweise aus der Umgebung wieder nachgeführt bzw. ihr entzogen werden kann. Durch die Verdunstung in oder an den Feuchte regulierenden Mitteln wird somit die Wärmeaufnahmekapazität der Wärme regulierenden Mitteln indirekt erhöht.

Ein Teil 14 der ins Komposit 10 zugeführten Wärme- und Feuchtigkeitsmenge wird im Komposit 10 verteilt. Ein Überschuss 15 an Wärme und Feuchtigkeit wird wieder an die Umgebung abgegeben. Dies geschieht hauptsächlich durch Verdunstung und/oder Wärmeleitung. Eine in wesentlichen umgekehrte Situation zeigt Figur 1b. Dort ist der Wärmeinhalt der unmittelbaren Umgebung kleiner als der im erfindungsgemässen Komposit 10. Die zuvor in den Wärme regulierenden Mitteln 13 gespeicherte Wärme, wird zumindest teilweise wieder an die Umgebung abgegeben. Aus dem Komposit 10 abgeführte Wärme und Feuchtigkeit, mit Pfeilen 16, 17 dargestellt, wird aus anderen Bereichen des Komposits 10 nachgeführt. Das erfindungsgemässe Komposit 10 reagiert auf sich ändernde Umgebungsbedingungen, indem die im Komposit 10 enthaltenen Wärme und Feuchte regulierenden Mittel 13 für ausgleichende Wirkung sorgen und somit für ein im wesentlichen konstantes Wärme- und Feuchteklima in unmittelbarere Umgebung des Komposits 10 sorgen.

Wird nun das Wirkungsprinzip des erfindungsgemässen Komposits 10 in Bettwaren angewendet, so werden die Wärme und Feuchte regulierenden Mittel 13 durch speziell gewählte Materialien und deren Gestaltung oder Zusammensetzung realisiert. Als Wärme regulierende Mittel kommen in den folgenden Ausführungsbeispielen der erfindungsgemässen Bettware ,Phase Change Materials ' (PCMs) zur Anwendung. Diese sind vorzugsweise dergestalt verarbeitet, z. B. als Schäume, so dass sie gleichzeitig auch Feuchte regulierende Mittel sind. Die PCM haltigen Materialien werden mit (weiteren) Feuchte regulierenden Mitteln wie beispielsweise Seide, Polyester, Mischgewebe, Daunen etc. kombiniert. Dabei werden die Materialien, im Speziellen Aussenschichten, welche zur Hülle einer Bettware verarbeitet werden, so gewählt, dass die erfindungsgemässe Bettware angenehm anzufühlen ist.

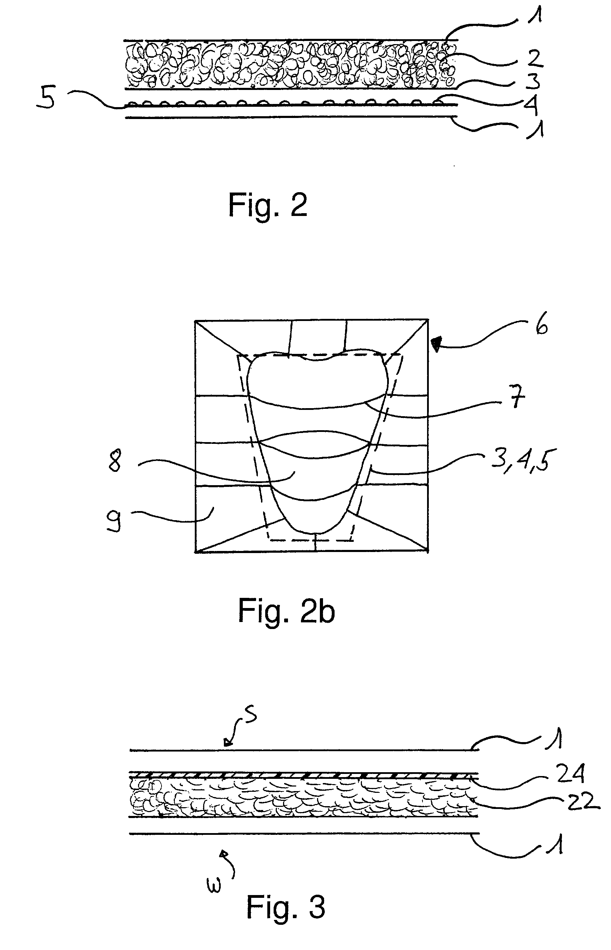

In Figur 2 ist der Aufbau eines erfindungsgemässen Komposits zu sehen, das auf die Verwendung in bzw. für ein Duvet optimiert ist. PCM haltiges Material 4 ist in einem regelmässigen Muster, z. B. als hexagonal angeordnete Tropfen, auf einem Vlies 5, z. B. Baumwollvlies, angeordnet. Das Aufbringen des PCM haltigen Materials 4 auf das Vlies 5 geschieht vorzugsweise mit Hilfe eines Filtergitters, durch das das nachträglich zu trocknende Material im gewünschten Muster fliessen kann. Über dem schichtförmig angeordneten PCM haltigen Material befindet sich eine Daunenschicht 2. Die Dichte der Daunenschicht 2 kann je nach Isolationswirkung des daraus hergestellten Duvets gewählt werden. Zwischen Daunenschicht 2 und PCM haltigem Material 4 befindet sich zusätzlich ein Spinnvlies 3. Dieses schützt im wesentlichen die Daunen, in dem es ein Anhaften der Daunen am PCM haltigen Material 4 verhindert. Aussen an der Daunenschicht 2 auf der einen Seite und der Vliesunterlage 5 auf der anderen Seite befindet sich je eine Aussenschicht 1. Diese Aussenschicht 1 ist ein Mischgewebe aus Baumwolle und Kunststoffasern wie z. B. Micromodal, Viskose o.ä..

Anstelle des PCM haltigen Materials 4 auf einem Vlies 5 wird bevorzugt auch ein PCM haltiger Schaum verwendet. Dieser Schaum ist möglichst flexibel gestaltet, beispielsweise mit Schlitzen versehen und weist eine geringe Dicke von ca. 2mm auf. Dies entspricht beispielsweise im Handel erhältlichen Schäumen mit ca. 400-450g/m² [PCM/Fläche], z. B. 425g/m². Wird das PCM auf der den Daunen abgewandten Seite der Vliesunterlage 5 aufgebracht, z. B. aufgetropft, aufgewalkt oder eingedrückt, so kann das Spinnvlies 3 auch weggelassen werden.

Zur Herstellung eines Duvets werden die Ränder der genannten Schichtabfolge typischerweise abgesteppt, so dass sämtliche inneren Schichten inklusive Füllmaterialien von den Aussenschichten 1 umhüllt werden. Allfällige über das Duvet verlaufende Absteppungen werden vorzugsweise vor dem Einfüllen der Daunen vorgenommen, um zu verhindern, dass Daunen miteingenäht werden. Ein Duvet oder eine sonstige Bettware kann im wesentlichen beliebig gestaltete oder verteilte Absteppungen aufweisen. Beispielsweise sind dies streifen- oder wellenförmige, in Karos oder Waben angeordnete oder der Körperform angepasste Absteppungen.

In **Figur 2b** ist eine bevorzugte Verarbeitungsform des in Figur 1 gezeigten Komposits zu einem Duvet 6 gezeigt. Das PCM haltige Material 4, inklusive Vliesunterlage 5 und Spinnvlies 3 sind in einem mittleren Bereich, einem Körperbereich 8, des Duvets angebracht. Das Duvet ist mit Absteppungen 7 versehen, die im Groben an die Körperform einer Person angepasst sind.

Abgesteppte, mit Daunen gefüllte Kammern trennen den Körperbereich 8 von einem Randbereich 9. Körperbereich 8 und Randbereich 9 sind bevorzugt mit unterschiedlichen Mengen von Daunen gefüllt. Durch die Unterscheidung des Duvet in einen Körperbereich 8 und einen Randbereich 9, bildet das erfindungsgemässe Duvet eine Schlafhöhle in der sich eine Person bevorzugt aufhält. Die Einschränkung des PCM haltigen Materials 4 auf einen Körperbereich 8 hilft Kosten einsparen, ohne die Wirkung des Duvets 6 zu beeinträchtigen. Die gezeigte Verarbeitungsform ist nicht auf ein Duvet oder die beschriebene Schichtabfolge bzw. die genannten Materialien beschränkt. Die Verarbeitungsform kann beispielsweise auch für eine Auflage, unterschiedliche Anzahl und kombinierte Schichten und Materialien verwendet werden.

**Figur 3** zeigt einen Aufbau des erfindungsgemässen Komposits, der für eine Matratzenauflage optimiert ist. Zwischen Aussenschichten 1, die aus einem Mischgewebe mit Baumwolle und Micromodal bestehen, befindet sich eine Schicht aus einem PCM haltigen Schaum 24 und eine Schicht aus Seidenvlies 22. Der PCM haltige Schaum 24 ist wenige Millimeter dick, z. B. 1-5 mm, vorzugsweise 3 mm. Diese Schaumdicke ist vorzugsweise leicht dicker, wie die für ein Duvet. Die Dicke entspricht beispielsweise einem im Handel erhältlichen Schaum mit ca. 500-600g/m² [PCM/Fläche], z. B. 558g/m². Der Schaum 24 weist zudem eine Oberfläche und Struktur auf, die es Wasserdampf und Wasser ermöglicht, rasch ins Innere des Schaums 24 einzudringen. Das Seidenvlies 22 ist in frischem und unkomprimiertem Zustand wenige cm dick und ist zur zusätzlichen Stabilisierung mit einem anderen Material, vorzugsweise Wolle, versehen. Typische Werte für stabilisierendes Material liegen in einem Bereich von 5-50 %, bevorzugt zwischen 10 und 30%, typischerweise bei 20%.

Die eine Seite des Komposits, die näher beim PCM haltigen Material 24 liegt, ermöglicht einen direkteren Einfluss des PCM mit der Umgebung. Dies bedeutet beispielsweise, dass ein Kontakt mit dieser Seite einen spürbaren kühlenden Effekt aufweist. Auf der gegenüberliegenden Seite des Komposits wirkt das PCM über das isolierende Seidenvlies 22. Durch die isolierende Wirkung des Seidenvlieses 22 ist die Wirkung des PCM zwar vorhanden, aber kein kühlender Effekt mehr direkt spürbar. Als Matratzenauflage eignet sich die kühlende Seite besonders für Leute, die eine kühle Umgebung beim Schlafen bevorzugen, die prinzipiell zum Schwitzen neigen oder einfach als Sommerseite S der Auflage. Von einem Körper abgegebene Feuchtigkeit und Nässe wird auf der Sommerseite S sehr direkt und rasch vom PCM Schaum 24 aufgenommen und zumindest teilweise ans Seidenvlies 22 weitergegeben. Die Struktur des Seidenvlieses 22 ermöglicht eine gute Verteilung der Feuchtigkeit und dementsprechend ihre Verdunstung. Andererseits nimmt das PCM im PCM haltigen Schaum 24 überschüssige Wärme auf, so dass eine Person weniger schwitzt und insgesamt weniger abzuführende Feuchtigkeit produziert. Die der Sommerseite S gegenüberliegende Seite der Auflage dient beispielsweise als Winterseite W der Auflage.

Für eine erfindungsgemässe Auflage wird das Komposit an den Rändern mit Einfassband eingefasst und mit elastischen Bändern versehen. Mit diesen wird die Auflage an einer Matratze befestigt, indem die Bänder über die Matratze gestülpt werden. Elastische Bänder als Befestigungsmittel für eine Auflage ermöglichen ein problemloses Wählen der Auflagenober- und unterseite. Über die Auflage sind zusätzlich Absteppungen oder Fixierungen verteilt, die das Verrutschen der einzelnen Schichten gegeneinander verhindern und gleichzeitig dekorativen und/oder Werbezwecken dienen können.

Für Wasser- und Luftbetten werden vorzugsweise andere Befestigungsmittel für die erfindungsgemässe Auflage gewählt. Dies sind typischerweise Schnellverschlüsse, wie Reiss- oder Klettverschlüsse. Mittels diesen Schnellverschlüssen wird die Auflage an einer Bettumhüllung befestigt, die zu den Befestigungsmitteln der Auflage korrespondierende Befestigungsmittel aufweist. Die Auflage kann damit entsprechend leicht, z. B. zum Reinigen, wieder entfernt werden. Befestigungsmittel für Wasser- und Luftbetten sind bevorzugt über den gesamten Rand einer Auflage verteilt.

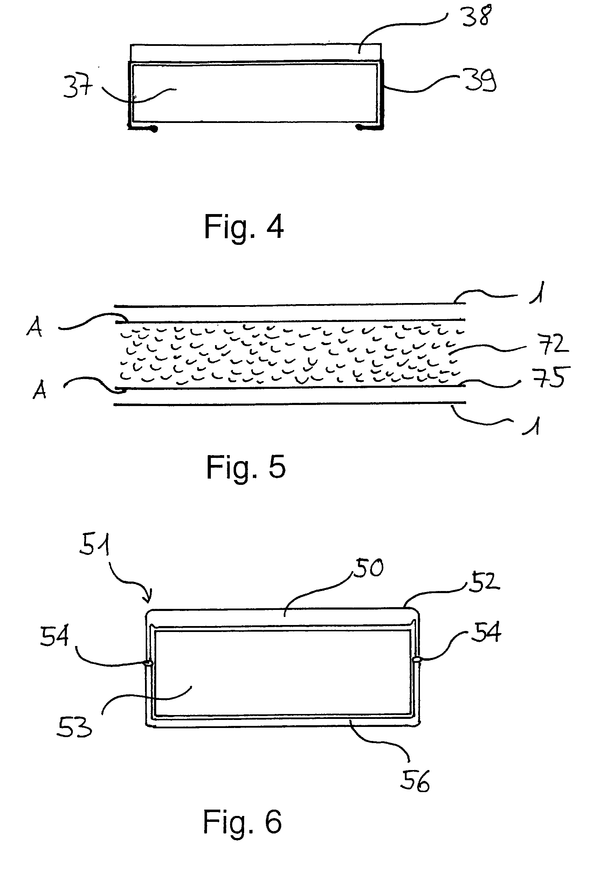

Eine andere Art der Befestigung einer Auflage ist in **Figur 4** gezeigt. An den Rändern der Auflage 38 ist rundum ein Stück eines dünnen und/oder dehnbaren Materials 39 angebracht. Mit diesem wird die Auflage wie ein Fixleintuch über eine Matratze 37 gelegt. Das dehnbare Material 39 besteht vorzugsweise aus Maschengewebe, z. B. Jersey, wie es für handelsübliche Fixleintücher verwendet wird.

In **Figur 5** ist der schematische Aufbau eines Duvets gezeigt. Die Schichtabfolge ist symmetrisch bezüglich einer aus Füllmaterial 72 bestehenden Mittelschicht aufgebaut. Das Füllmaterial, bspw. Daunen, Seidenvlies oder synthetisches Füllmaterial, ist beidseitig von einem Spinnvlies 75 oder einer anderen dünnen Gewebeschicht umgeben. Auf bzw. in das Spinnvlies 75 ist PCM auf- bzw. eingebracht, beispielsweise aufgedrückt, eingewalzt, thermisch eingearbeitet oder eingewoben. Aussenschichten 1 sind beidseitig als äussere Schichten angeordnet. Sie umgeben nach Verarbeitung der beschriebenen Materialschichten zu einer Bettware das Füllmaterial 72, sowie die PCM tragenden Spinnvliese 75 und sind der direkte Kontakt der Bettware zur Umgebung.

Figur 6 zeigt eine Matratze 51 mit eingearbeitetem erfindungsgemässem Komposit 50. Die Matratze 51 weist einen Matratzenkern 53, z.B. Schaumstoff, Latex, auf, welcher in ein Unterteil 56 eingelegt wird und von einer Matratzenhülle umschlossen ist. Die Matratzenhülle besteht im wesentlichen aus dem Unterteil 56 und einem Oberteil 52. Diese weisen korrespondierende Befestigungsmittel 54 auf, mittels denen die beiden Teile aneinander befestigt werden können. Die Befestigungsmittel 54 sind vorzugsweise in einer Längsebene um den gesamten Umfang einer Matratze angebracht, so dass das Oberteil 52 entfernt und wieder angebracht werden kann. Das im Oberteil 50 eingearbeitete Komposit 50 ist bspw. als asymmetrisches Komposit gestaltet, beispielsweise wie eine in Figur 3 beschriebene Auflage. Durch Trennen der Befestigungsmittel 54, kehren des Oberteils 52 und erneutem Schliessen der Befestigungsmittel 54 kann damit die gewünschte Seite des Komposits als Auflagefläche gewählt werden. Auch kann der Matratzenkern 53 im wesentlichen nach Belieben gestaltet und ausgetauscht werden. Beispielsweise kann ein harter Kern durch einen weichen ersetzt werden.

## Patentansprüche

1. Bettware aufweisend ein Komposit (10,50) mit einer Aussenschicht (1), wobei das Komposit (10,50) Wärme und Feuchte regulierende Mittel (13) aufweist, wobei eine erste Schicht des Komposits (10,50) Wärme regulierende Mittel in Form von ,phase change materials' (PCM) beinhaltet und eine zweite Schicht Feuchte regulierende Mittel in Form von Füllmaterial beinhaltet, und wobei die Feuchte regulierenden Mittel derart ausgestaltet sind, dass sie Feuchtigkeit aufnehmen können, so dass die Bettware eine regulierende Wirkung bezüglich Wärme- und Feuchtigkeit zwischen Umgebung und Bettware aufweist.

2. Bettware gemäss Anspruch 1, **dadurch gekennzeichnet, dass** das Füllmaterial Daunen (2), Federn, Seidenvliese (22) oder synthetisches Füllmaterial beinhaltet.

3. Bettware gemäss einem der vorangehenden Ansprüche, **dadurch gekennzeichnet, dass** das Komposit (10,50) Feuchtigkeit ableitende Fasern, wie bspw. Seide- oder Polyesterfasern, beinhaltet.

4. Bettware gemäss einem der vorangehenden Ansprüche, **dadurch gekennzeichnet, dass** die mindestens eine Aussenschicht (1) ein Mischgewebe, Baumwolle, Seide oder synthetisches Gewebe beinhaltet.

5. Bettware gemäss einem der vorangehenden Ansprüche, **dadurch gekennzeichnet, dass** die erste Schicht ein PCM-haltiger Schaum (24) ist.

6. Bettware gemäss Anspruch 5, **dadurch gekennzeichnet, dass** die zweite Schicht ein Seidenvlies (22) ist und dass die Aussenschicht (1) ein baumwollhaltiges Mischgewebe beinhaltet.

7. Bettware gemäss einem der vorangehenden Ansprüche 1 - 4, **dadurch gekennzeichnet, dass** das Komposit (10,50) eine Vliesunterlage (5) aufweist, auf die ein PCM-haltiges Material (4) auf- oder eingebracht ist, und dass die zweite Schicht Daunen (2), Federn oder synthetisches Füllmaterial beinhaltet und die Aussenschicht (1) baumwollhaltiges Mischgewebe beinhaltet.

8. Bettware gemäss Anspruch 7, **dadurch gekennzeichnet, dass** zwischen dem PCM-haltigen Material (4) und der zweiten Schicht (2) ein Spinnvlies (3) zum Schutz der Daunen, Federn oder des synthetischen Füllmaterials angebracht ist.

9. Bettware gemäss einem der vorangehenden Ansprüche, **dadurch gekennzeichnet, dass** das Komposit (10,50) im Schichtaufbau im wesentlichen symmetrisch bezüglich einer Mittelschicht ist.

10. Bettware gemäss Anspruch 9, **dadurch gekennzeichnet, dass** die Mittelschicht Füllmaterial beinhaltet.

11. Bettware gemäss einem der Ansprüche 1-8, **dadurch gekennzeichnet, dass** das Komposit (10,50) im Schichtaufbau im wesentlichen asymmetrisch ist.

12. Bettware gemäss einem der vorangehenden Ansprüche, **dadurch gekennzeichnet, dass** genau eine Schicht PCM enthält.

13. Bettware gemäss einem der vorangehenden Ansprüche, **dadurch gekennzeichnet, dass** die Bettware einen, im wesentlichen an die Körperform einer Person angepassten, Körperbereich (8) und einen durch Absteppungen (7) von diesem abgetrennten Randbereich (9) aufweist, welche Bereiche (8, 9) sich durch eine unterschiedliche Absteppung (7), unterschiedliche Materialien oder unterschiedliche Mengen von Materialien unterscheiden.

14. Bettware gemäss Anspruch 13, **dadurch gekennzeichnet, dass** vorwiegend der Körperbereich (8) PCM haltiges Material (4, 24) aufweist.

15. Verfahren zum Herstellen einer Wärme und Feuchte regulierenden Bettware, wobei Wärme regulierende Mittel in Form von ,phase change materials' und Feuchte regulierende Mittel in Form von Füllmaterial schichtartig zwischen Aussenschichten (1) einer Bettware angeordnet werden, wobei die Wärme regulierenden Mittel fähig sind Wärme aufzunehmen, zu speichern und abzugeben, wobei die Feuchte regulierenden Mittel fähig sind Feuchtigkeit aufzunehmen, zu speichern und abzugeben, wobei Wärme und Feuchte regulierende Mittel (13) derart kombiniert werden, dass durch Verdunstung abgegebene Wärmeenergie durch in den Wärme regulierenden Mitteln gespeicherte Wärmeenergie ausgeglichen wird, und dass die Bettware auf eine sich ändernde Wärme- und Feuchteumgebung reagiert und eine regulierende Wirkung bezüglich Wärme und Feuchtigkeit aufweist.
